# EUROPEAN PATENT APPLICATION

(11) **EP 2 023 252 A1**
(43) Date of publication of application: **11.02.2009**
(21) Application number: 07737015.3
(22) Date of filing: 03.04.2007
(51) Int. Cl.: G06F 15/17, G06F 12/06

(54) **MULTIPROCESSOR SYSTEM, LIBRARY MODULE, AND DRAWING PROCESSING METHOD**

(30) Priority: 25.05.2006 JP 2006145727
(71) Applicant: Sony Computer Entertainment Inc., Minato-ku Tokyo 107-0062 (JP)
(72) Inventor: FUJII, Noboru, Tokyo 107-0062 (JP); ITO, Masatomo, Tokyo 107-0062 (JP)
(74) Representative: Davies, Simon Robert
(86) International application number: PCT/JP2007/000358
(87) International publication number: WO 2007/138735

(57) **Abstract**

A multiprocessor system is provided in which a CPU 100 and a GPU 200 are connected via an IOIF 110. A main memory 120 is installed in the CPU 100 and a local memory 220 is installed in the GPU 200. The CPU 100 queues graphics commands that an application 300 has generated using a graphics library 300 into a command buffer 10 in the main memory 120. The GPU 200 reads the graphics commands stored in the command buffer 10 and executes them. The area of the main memory 120 is memory-mapped to an I/O address space and the GPU 200 reads the data memory-mapped to the I/O address space via the IOIF 110 and utilizes the data for graphics computation.

## Description

### TECHNICAL FIELD

The present invention relates to a graphics processing technology, and more particularly to a graphics processing technology and a graphics library in a multiprocessor.

### BACKGROUND ART

High-resolution graphics are widely utilized in personal computers and video game machines. There are, for example, various applications, such as games and simulations which use high-quality 3D-computer graphics, and play video content including a combination of live action and computer graphics.

In general, a CPU and a graphics processing unit (GPU) perform a graphics process in cooperation with each other. The CPU is a general-purpose processor for performing general-purpose computation, while the GPU is a dedicated processor for performing advanced graphics computation. The CPU performs geometry computation such as projection transformation or the like based on a three-dimensional model, while the GPU receives vertex data from the CPU and performs a rendering process. The GPU is configured by a dedicated hardware such as a rasterizer or a pixel shader and the GPU performs a graphics process by means of a pipeline process. The latest GPU has a programmable shader function called a program shader.

### DISCLOSURE OF THE INVENTION

### PROBLEMS TO BE SOLVED BY THE INVENTION

When the CPU and the GPU perform a graphics process in cooperation with each other, the graphics process need to be optimally divided between the CPU and the GPU in consideration of the difference in processing capabilities thereof and/or the difference in the capacity of the memory installed therein. In particular, the CPU can have a memory of a sufficient capacity, while the GPU may have a memory of a limited capacity. Therefore the memory of the GPU needs to be fully utilized. In addition, if there is a limitation on the bandwidth of an input/output interface that connects the CPU and the GPU, the bandwidth will be a bottleneck and the overall efficiency of the graphics process will degrade.

The present invention has been made in view of the aforementioned problems, and it is a general purpose of the present invention to improve the efficiency of a graphics process in a multiprocessor having a CPU and a GPU.

### MEANS TO SOLVE THE PROBLEMS

In order to solve the aforementioned problems, a multiprocessor system according to one embodiment of the present invention comprises: a graphics processing unit having a local memory; a general-purpose processing unit having a main memory; and an I/O interface which connects an I/O port of the graphics processing unit and an I/O port of the general-purpose processing unit, the I/O interface adapted to exchange data between the graphics processing unit and the general-purpose processing unit. A certain virtual memory area in the main memory is memory-mapped to an I/O address space that is accessible via the I/O interface so that the graphics processing unit can access the virtual memory area via the I/O interface; and the virtual memory area in the main memory retains a file holding data that the graphics processing unit refers to in graphics computation, the data being not updated in the graphics computation, and the graphics processing unit accesses the virtual memory memory-mapped to the I/O address space via the I/O interface so as to read the file and utilize the file for the graphics computation.

The "data that the graphics processing unit refers to in graphics computation, the data being not updated in the graphics computation" retained in the virtual memory area in the main memory includes, for instance, a texture utilized for texture mapping, geometry data such as vertex data, a code sequence such as a shader program, and so on.

The virtual memory area of the main memory may retain at least one of a plurality of files holding data that the graphics processing unit refers to in graphics computation, the data being not updated in the graphics computation and the local memory may retain the rest of the files, and the graphics processing unit may access the virtual memory memory-mapped to the I/O address space via the I/O interface to read the at least one of the files and also access the local memory to read the rest of the files so that the graphics processing unit can utilize the plurality of the files thus read for the graphics computation.

The virtual memory area of the main memory and the local memory may retain the same file redundantly, and the graphics processing unit may switch between reading the file by accessing the virtual memory via the I/O interface and reading the file by accessing the local memory, depending on congestion status of a bus of the local memory and utilize the file thus read from the virtual memory or the local memory for the graphics computation.

Another embodiment of the present invention relates to a library module. This library module is one in which program modules to be called from a program executed by a general-purpose processing unit coupled to a graphics processing unit via an I/O interface are compiled into a file. The library module causes the general-purpose processing unit to perform: a memory management function for memory-mapping a certain virtual memory area in a main memory installed in the general-purpose processing unit to an I/O address space which is accessible via the I/O interface so that the graphics processing unit can access the virtual memory area via the I/O interface; and a data allocation function for allocating a file holding data that the graphics processing unit refers to in graphics computation in the virtual memory area of the main memory, the data being not updated in the graphics processing.

The graphics library module may further cause the general-purpose processing unit to perform: an interface function for receiving designation of at least one file to be allocated in the virtual memory area of the main memory among a plurality of files holding data that the graphics processing unit refers to in graphics computation, the data being not updated in the graphics computation; and a data transfer function for transferring data between the main memory and a local memory installed in the graphics processing unit, wherein the data allocation function may allocate the at least one file thus designated among the plurality of the files in the main memory and the data transfer function transfers the rest of the files to the local memory.

Still another embodiment of the present invention relates to a rendering processing method. This method is a rendering processing method employed in a multiprocessor system in which a general-purpose processing unit and a graphics processing unit are connected to each other via an I/O interface, the method comprising: memory-mapping a certain virtual memory area in a main memory installed in the general-purpose processing unit to an I/O address space which is accessible via the I/O interface so that the graphics processing unit can access the virtual memory area via the I/O interface; retaining in the virtual memory area of the main memory a file holding data that the graphics processing unit refers to in graphics computation, the data being not updated in the graphics processing; and accessing, by the graphics processing unit, the virtual memory memory-mapped to the I/O address space via the I/O interface so as to read the file and utilizing the file for the graphics computation.

Arbitrary combinations of the aforementioned constituting elements, and implementations of the invention in the form of methods, processors, apparatuses, systems, computer programs, program products, and data structures may also be practiced as additional embodiments of the present invention.

### ADVANTAGES OF THE INVENTION

According to the present invention, the efficiency of a graphics process can be improved.

### BRIEF DESCRIPTION OF THE DRAWINGS

Fig. 1 is a block diagram of a multiprocessor system according to an embodiment;
Fig. 2 illustrates a relationship between an effective address space and an I/O address space;
Fig. 3A shows a configuration in which a texture is allocated in a local memory;
Fig. 3B shows a configuration in which a texture is allocated in a main memory;
Fig. 3C shows a configuration in which the textures are distributed and allocated in the main memory and the local memory;
Fig. 4 shows the transfer speed of the textures when the number of the textures allocated in the main memory is changed; and
Fig. 5 illustrates functions that are offered by a graphics library.

### DESCRIPTION OF REFERENCE NUMERALS

10 command buffer, 12, 22 geometry data, 14, 24 texture, 16, 26 shader program, 20 frame buffer, 100 CPU, 110 IOIF, 120 main memory, 122 bus, 140 effective address space, 150 I/O address space, 162 memory management function, 164 data allocation function, 166 data transfer function, 200 GPU, 220 local memory, 222 bus, 300 graphics library, 310 application.

### BEST MODE FOR CARRYING OUT THE INVENTION

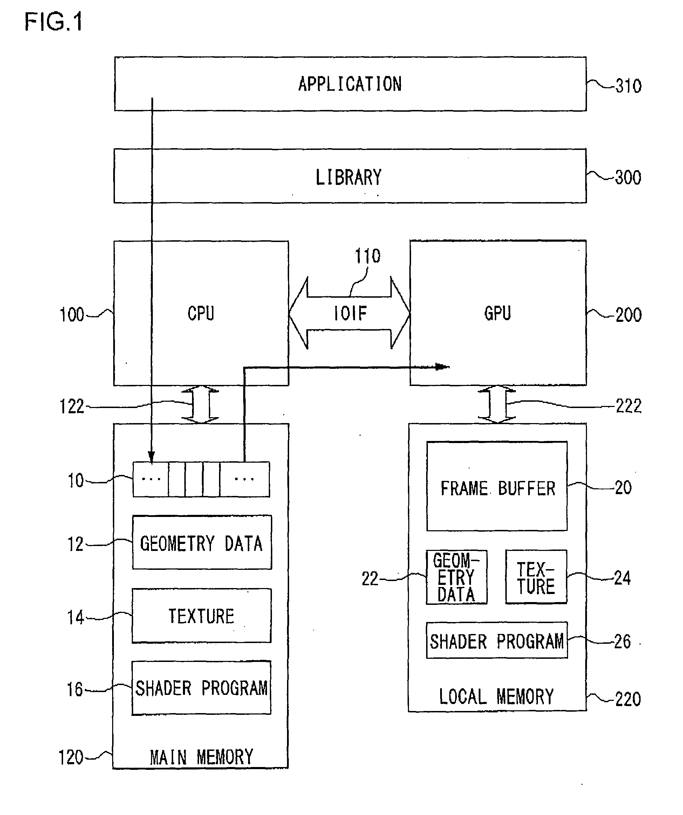

Fig. 1 is a block diagram of a multiprocessor system according to an embodiment. The multiprocessor system includes a central processing unit (CPU) 100, a graphics processing unit (GPU) 200, a main memory 120, and a local memory 220.

The CPU 100 may be a single main processor, a multiprocessor system including a plurality of processors, or a multi-core processor which is provided as a single package integrating a plurality of processor cores. The GPU 200 is a graphics chip having a graphics processor core therein.

An input/output port of the CPU 100 and an input/output port of the GPU 200 are connected to each other via an input/output interface 110 (hereinafter it is referred to as "IOIF"). The CPU 100 and the GPU 200 can exchange data with each other via the IOIF 110. The IOIF 110 is a highspeed interface and its bandwidth is almost the same as that of a bus 122 connecting the CPU 100 and the main memory 120 and that of a bus 222 connecting the GPU 200 and the local memory 220.

A graphics library 300 is a library for generating and managing graphics commands to be generated for a rendering process. An application 310 can call this library and execute a graphics process. The graphics library 300 also offers functions for memory management and data transfer control. Using these functions, the application 310 can perform memory-mapping and memory-to-memory transfer of data such as geometry information, a texture, a shader program or the like.

The CPU 100 queues into a command buffer 10 provided in the main memory 120 the graphics commands that the application 310 has generated using the graphics library 300. The GPU 200 sequentially reads out the graphics commands stored in the command buffer 10 and processes them. A synchronous function is provided for reading and writing the graphics commands from/to the command buffer 10. Therefore, the application 310 can control the flow of the process from the CPU 100 to the GPU 200 at a fine level.

The CPU 100 generates geometry data 12 such as the vertex coordinate values of a polygon, a vertex color, a normal vector, and UV values and then stores them in the main memory 120. The CPU 100 also stores a texture 14 to be mapped to a surface of a polygon in the main memory 120. Furthermore, the CPU 100 reads a shader program 16 from a recording medium such as a hard disc and stores it in the main memory 120.

A memory area of the main memory 120 is memory-mapped to an I/O address space. The GPU 200 can read the memory area of the main memory 120 memory-mapped to the I/O address space via the IOIF 110. Thus, the GPU 200 can access not only the local memory 220 but also the main memory 120. Therefore, the data necessary for graphics computation such as geometry data, a texture or the like can be allocated in either the local memory 220 or the main memory 120. The data will be allocated in either the local memory 220 or the main memory 120 according to the frequency at which the data is referred to and its size so that the overall efficiency of the system can be improved.

The memory area in the main memory 120 in which the geometry data 12, the texture 14 and the shader program 16 are stored is memory-mapped to the I/O address space that is provided in a controller of the IOIF 110. The GPU 200 reads out the geometry data 12, the texture 14 and the shader program 16 memory-mapped to the I/O address space via the IOIF 110.

According to the shader program 16, the GPU 200 generates rasterized data of a polygon using the geometry data 12 and then writes pixel data to a frame buffer 20. Furthermore, the GPU 200 maps the texture 14 to a surface of a polygon and then writes the pixel data after the texture-mapping to the frame buffer 20.

If the geometry data 22, the texture 24 and the shader program 26 are stored in the local memory 220, the GPU 200 reads out these data from the local memory 220 and uses them for graphics computation. These data may be beforehand DMA transferred from the main memory 120 to the local memory 220. Alternatively, the GPU 200 may read them from the main memory 120 via the IOIF 110 and store them in the local memory 220.

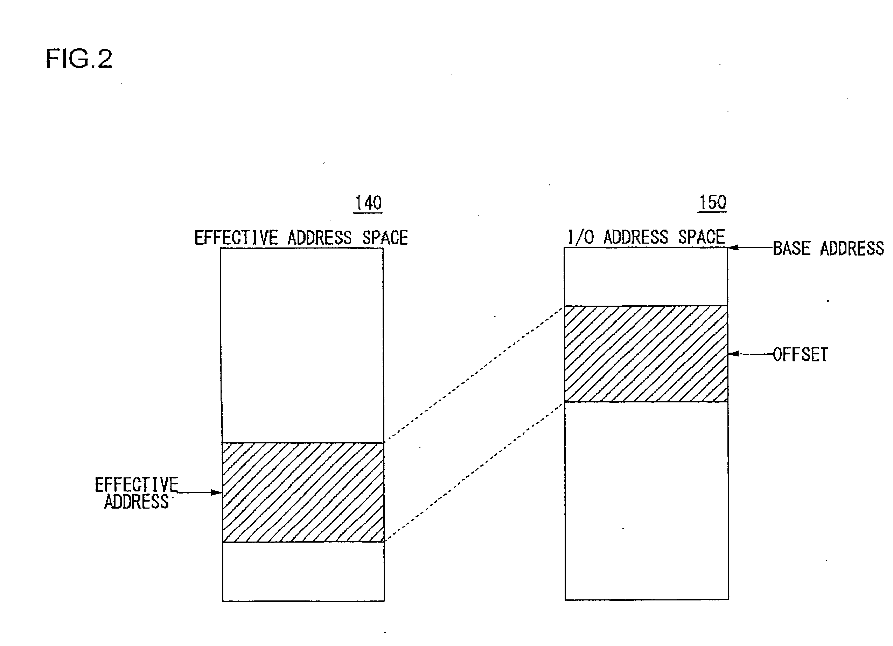

Fig. 2 illustrates the relationship between the effective address space 140 of the main memory 120 and the I/O address space 150 of the IOIF 110.

Using a memory initialization function of the graphics library 300, the application 310 reserves a memory area in the main memory 120 to which the access by the GPU 200 is allowed. The graphics library 300 memory-maps the reserved main area to the I/O address space according to the effective address and the size of the memory area. Thus, the memory area in the main memory 120 becomes accessible by the GPU 200 as a part of the I/O address space 150.

The destination address to be referred that is used when the GPU 200 accesses the main memory 120 is not the effective address of the effective address space 140, but an offset from the head address, that is a base address, of the I/O address space 150. The graphics library 300 manages the base address of the I/O address space 150 and also offers a function for converting the effective address used in referring to the effective address space 140 to an offset used in referring to the I/O address space 150.

The graphics library 300 manages the memory mapping from the effective address space 140 to the I/O address space 150 and also ensures that the consecutive area in the main memory 120 reserved by the application can be also viewed as a consecutive area from the GPU 200. Thereby, the data referred to by using the effective address in the effective address space 140 can be read by specifying an offset for the base address in the I/O address space 150. It is noted that the effective address space 140 and the I/O address space 150 are virtual memory spaces and therefore they do not have to be physically consecutive memory areas.

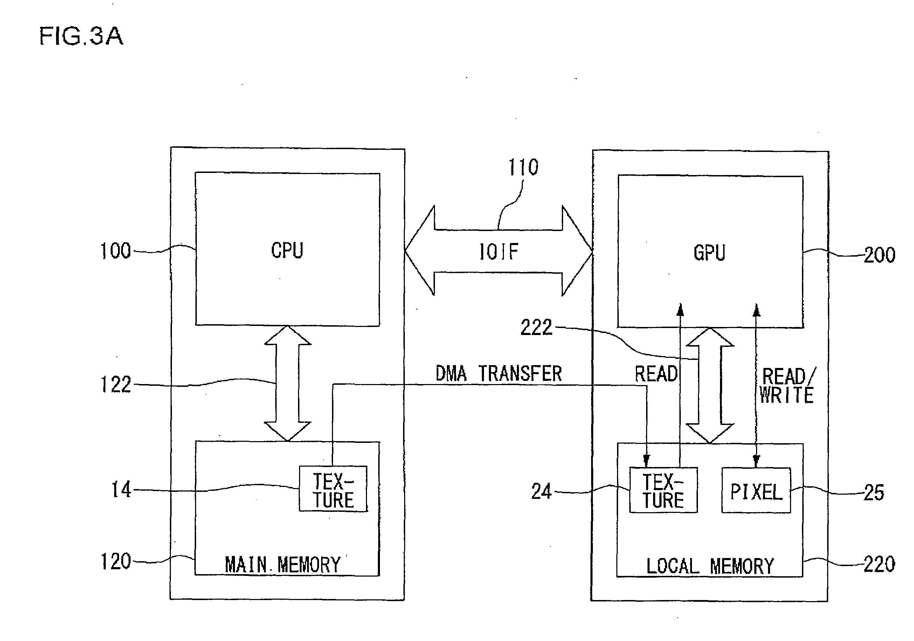

Hereinafter, with reference to Figs. 3A to 3C, it is now explained how the transfer efficiency of the textures changes when the textures are allocated in the main memory 120 and/or the local memory 220. The illustration is herein given using the textures, however, the same can be applied to a situation in which the data other than the textures necessary for graphics computation should be allocated.

Fig. 3A shows a configuration in which a texture is allocated in the local memory 220. The texture 14 stored in the main memory 120 is beforehand DMA transferred to the local memory 220. The GPU 200 reads the texture 24 thus DMA transferred to the local memory 220 and then utilize it for graphics computation. On the other hand, the GPU 200 reads and writes pixel data 25 from/to the frame buffer 20 in the local memory 220.

By this configuration, the bus 222 between the GPU 200 and the local memory 220 can be used for both the read/write of the pixel data 25 and the read of the texture 24 and the bus bandwidth is consumed for the bidirectional read and write. As a result of it, the transfer speed of the texture will be lowered and the overall processing efficiency of the graphics computation will degrade.

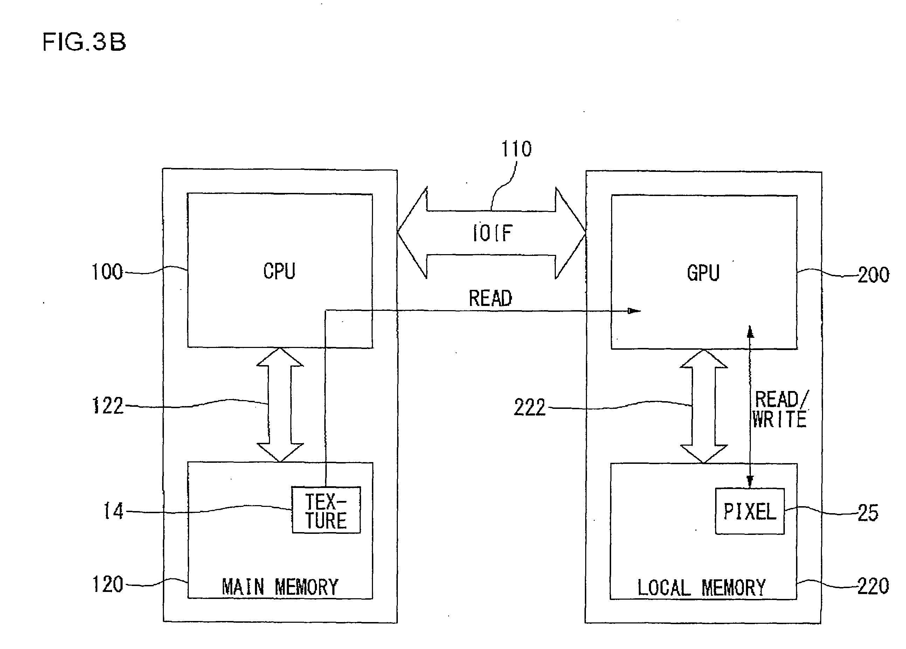

Fig. 3B shows a configuration in which a texture is allocated in the main memory 120. The texture 14 is stored in the main memory 120 and the area where the texture 14 is stored is memory-mapped to the I/O address space so as to be accessible from the GPU 200. The GPU 200 reads the texture 14 in the main memory 120 via the IOIF 110 and utilizes it for texture mapping. On the other hand, the GPU 200 reads and writes the pixel data 25 from/to the frame buffer 20 in the local memory 220.

By this configuration, the read of the texture 14 is conducted by using the bandwidth of the IOIF 110 and the read and write of the pixel data 25 is conducted by using the bandwidth of the bus 222. In comparison with the configuration of Fig. 3A, the bandwidth of the bus 222 is only used for the read and write of the pixel data 25 and the read of the texture will not place any burden on the bus 222. Since the texture 14 is transferred by using the bandwidth of the IOIF 110, the transfer speed of the texture 14 will not be lowered while the GPU 200 is writing the pixel data 25 to the frame buffer 20 in the local memory 220.

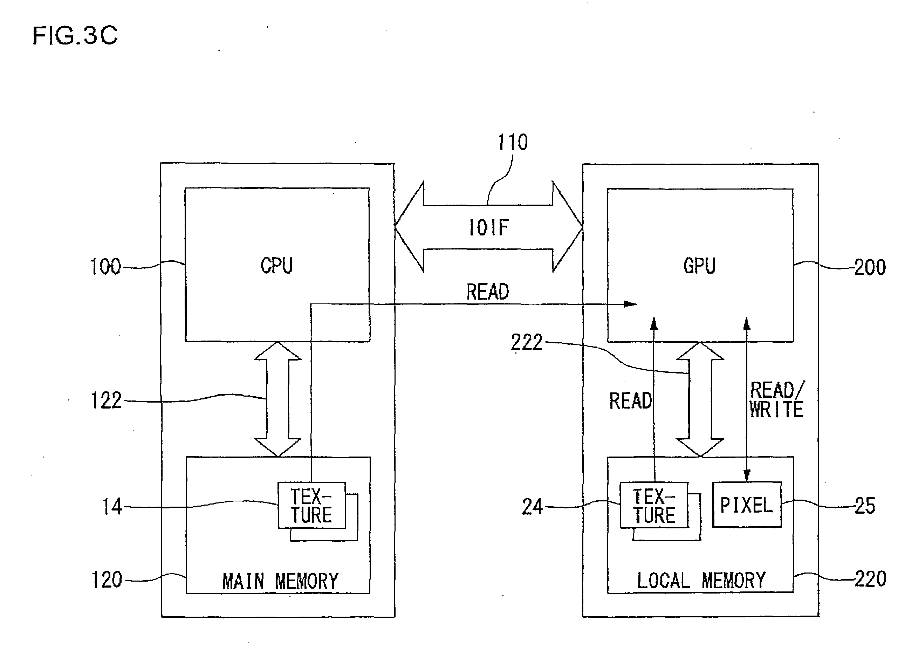

Fig. 3C shows a configuration in which the textures are distributed and allocated in the main memory 120 and the local memory 220. When there are a plurality of texture files, a certain number of textures 14 are stored in the main memory 120 and the remaining number of the textures 24 are stored in the local memory 220.

The bandwidth of the IOIF 110 is as large as the bandwidth of the bus 222. However, when the GPU 200 reads the texture 14 in the main memory 120 via the IOIF 110, the process by the CPU 100 will intervene, causing a longer latency in comparison with the case in which the GPU 200 reads the texture 24 directly from the local memory 220 via the bus 222. On the other hand, when the GPU 200 reads the texture 24 from the local memory 220, it competes against the read and write of the pixel data 25, causing congestion on the bandwidth of the bus 222 and lowering the transfer speed. The speed of reading the texture can be optimized if the textures are distributed and stored in the main memory 120 and the local memory 220.

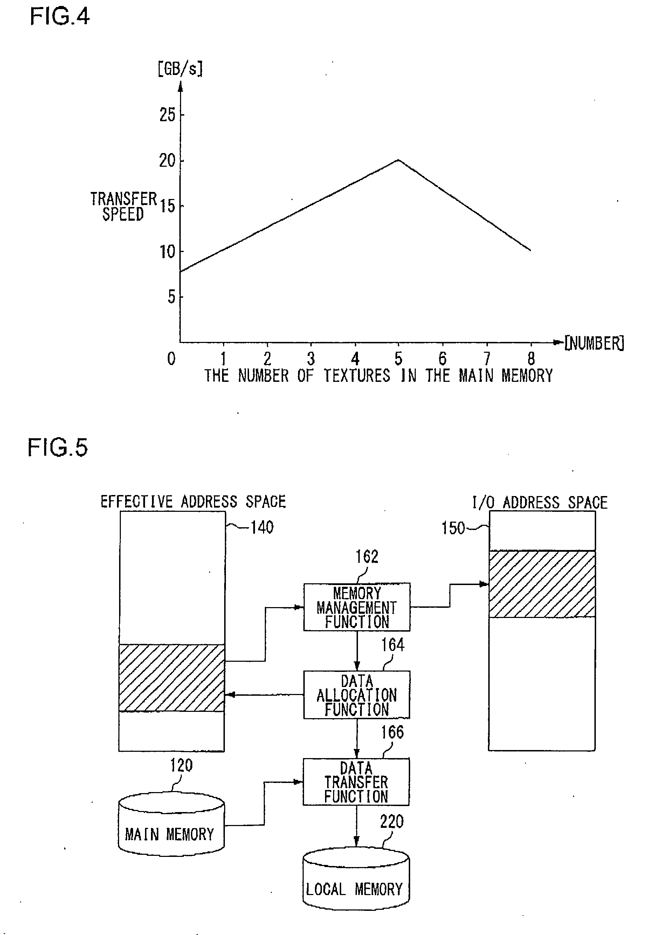

Fig. 4 shows the transfer speed of the textures when the number of the textures allocated in the main memory 120 is changed. Herein, an experiment is performed by using a sample program for performing rendering process by using eight textures. The time for rendering is measured while the number of the textures allocated in the main memory 120 and the local memory 220 is changed. The sample program calculates the average values of the eight textures and then texture-maps the average texture to each polygon. The speed of transferring all of the textures will be obtained by dividing the total amount of data of the eight textures by the measured rendering time.

The figure shows the speed of transferring all of the textures during the rendering process when the number of the textures allocated in the main memory 120 is changed from 0 to 8. The unit of the speed is gigabyte per second. The remaining number of textures not stored in the main memory 120 is beforehand transferred to the local memory 220. As the number of textures stored in the main memory 120 increases, the transfer speed increases and reaches the maximum when five textures are allocated in the main memory 120. It is because the read of the textures stored in the main memory 120 is performed by using the bandwidth of the IOIF 110 so that the congestion on the bus 222 of the local memory 220 can be avoided. However, when more than six textures are allocated in the main memory 120, the transfer speed decreases conversely. It is because the bandwidth of the IOIF 110 becomes a bottleneck and the rendering time also becomes longer because of the latency in reading the data from the local memory 220. It is noted that this result changes depending on the load status.

According to this experimental result, an optimal transfer speed can be achieved by allocating the five textures in the main memory 120 and the three textures in the local memory 220. The programmer determines in advance an optimal allocation of the textures to be allocated in the main memory 120 and the local memory 220 by performing an experiment using such a sample program. The graphics library 300 offers a function for transferring data from the main memory 120 to the local memory 220 and the programmer programs the allocation of the textures by using the function.

Alternatively, a program for processing a video texture can be used as another example of such a sample program. The video texture is a frame of the video mapped to a part of the screen as a texture. In this sample program of the video texture, the video frames generated by the video codec performed by the CPU 100 are used as textures and therefore the textures cannot be beforehand stored in the local memory 220. It is necessary that the video frames generated by the video codec in the main memory 120 are read directly by the GPU 200 or the video frames,generated in the main memory 120 are transferred to the local memory 220 frame by frame.

In the sample program for the video texture, the rendering time can be measured when the GPU 200 reads the video frames generated in the main memory 120 via the IOIF 110 and uses them for texture mapping. The rendering time can be also measured when the video frames are transferred from the main memory 120 to the local memory 220 via the IOIF 110 frame by frame and then GPU 200 reads the video frames from the local memory 220 via the bus 222 and uses them for texture mapping.

If the video frame is stored in the main memory 120 as a texture and the GPU 200 directly texture-maps it from the main memory 120, the access to the local memory 220 by the GPU 200 is limited to the write of the pixel data so that the burden of access to the local memory 220 will be alleviated. On the other hand, if the video frame is transferred to the local memory 220 and the GPU 200 reads the video frame from the local memory 220 and texture-maps it, the bidirectional access occurs for both the read of the texture from the local memory 220 and the write of the pixel data to the local memory 220 so that the texture transfer speed will decrease because of the congestion on the bus 222.

The programmer will simulate a real application by using a sample program that is close to the application and program the application so that the textures can be optimally allocated in the main memory 120 and/or the local memory 220.

When a plurality of textures are used for texture mapping, each texture may have a different frequency at which it is referred to. The texture having a higher frequency at which the GPU 200 refers may be allocated in the local memory 220 that is speedily accessible from the GPU 200, while the texture having a lower frequency at which the GPU 200 refers may be allocated in the main memory 120. By this configuration, the transfer efficiency can be properly adjusted. In addition, if the capacity of the local memory 220 is smaller than that of the main memory 120, the texture of a smaller size may be allocated in the local memory 220 and the texture of a larger size may be allocated in the main memory 120.

If a texture that has been beforehand prepared is used, no write to the texture occurs and the texture is only subject to reading. In this case, if the texture is allocated in the main memory 120 and read from the GPU 200, the overall efficiency of the graphics process can be improved. However, if the CPU 100 or the GPU 200 generates the texture, it will be more efficient to store the texture in the memory from/to which the CPU 100 or the GPU 200 generating the texture reads/writes.
An example is a procedural texture such as a texture generated by using a Perlin noise. Since the CPU 100 generates such a texture by calculations, it is more efficient to store the texture in the main memory 120 from/to which the CPU 100 reads/writes directly.

Another example is a rendered texture. When the GPU 200 uses as a texture the frame rendered in the frame buffer 20, it is more efficient to store the texture in the local memory 220 from/to which the GPU 200 reads/writes directly.

Thus, if a texture is subject to reading and writing, it is more advantageous in respect of the processing efficiency to store the texture in the main memory when the read and write is performed by the CPU 100, while it is more advantageous to store the texture in the local memory 220 when the read and write is performed by the GPU 200.

The same can be applied to vertex data. If the CPU 100 generates the vertex data, it is more efficient to allocate the vertex data in the main memory 120. If the GPU 200 generates the vertex data, it is more efficient to allocate the vertex data in the local memory 220. In displacement mapping in which the vertex positions are changed by texture mapping, the GPU 200 reads and writes the vertex data. In this case, it is more efficient to allocate the vertex data in the local memory 220.

As described above, the configuration in which the GPU 200 can access both the main memory 120 and the local memory 220 is utilized and data such as textures necessary for graphics computation are optimally distributed and allocated in the main memory 120 and/or the local memory 220. This contributes to raising the texture transfer speed and the graphics processing efficiency.

In particular, if the GPU 200 writes a large amount of pixel data to the local memory 220, for instance, for rendering a polygon of a large size, the bus 222 will be occupied by the write to the local memory 220. In such a case, it will be more efficient to allocate the texture in the main memory 120 and read the texture from the main memory 120 via the IOIF 110 and use it for texture mapping.

In the above explanation, the texture is allocated either in the main memory 120 or the local memory 220. If the local memory 220 has a sufficient capacity, the texture may be redundantly allocated both in the main memory 120 and the local memory 220 so that the same texture can be read from either the main memory 120 or the local memory 220. By this configuration, the texture can be read from the main memory 120 in such a situation that write access to the local memory 220 occurs more frequently, while the texture can be read from the local memory 220 in such a situation that write access to the local memory 220 occurs less frequently. The source from which the texture is read can be switched between the main memory 120 and the local memory 220, depending on the congestion on the bus 222 of the local memory 220. This is advantageous. It is not required to determine an optimal allocation of the textures by using the simulation or the like. Instead, the source from which the texture is read is dynamically switched between the main memory 120 and the local memory 220 so that the transfer efficiency can be optimized.

Fig. 5 illustrates functions that are offered by the graphics library 300. The graphics library 300 is a file into which program modules are compiled, such as a memory management function 162, a data allocation function 164, a data transfer function 166 and so on. A programmer is provided with an application program interface (API) for utilizing the functions of these program modules from the application 310.

Receiving the effective address and the size of a specified memory area in the effective address space 140, the memory management function 162 memory-maps the memory area to the I/O address space 150. The data allocation function 164 stores one that should be stored in the main memory 120 among the data necessary for graphics computation into the memory area of the effective address space 140. The data transfer function 166 reads from the main memory 120 one that should not be allocated in the main memory 120 but should be allocated in the local memory 220 among the data necessary for graphics computation and then transfers it to the local memory 220.

The above description is an explanation based on the embodiments. The embodiments are only illustrative in nature and it will be obvious to those skilled in the art that variations in constituting elements and processes are possible within the scope of the present invention. Some variations are described below.

In the embodiment, a texture mapping for mapping a texture on a polygon surface is explained, however, any data other than a texture may be mapped on a polygon surface. For instance, in the case of a bump mapping for mapping normal vectors, a normal vector map in which the normal vectors are stored will be used instead of a texture. As with the embodiment, it goes without saying that mapping data other than textures can be distributed and allocated in the main memory 120 and the local memory 220 so as to achieve an efficient transfer speed.

Although the latency when accessing the main memory 120 via the IOIF 110 is longer, the latency can be shortened by caching the data of the main memory 120 in the cache memory of the CPU 100. In particular, the CPU 100 may be provided with a texture cache for caching textures for reading the textures. If the texture cache is provided in the CPU 100, the efficiency of transfer utilizing the bandwidth of the IOIF 110 can be further improved when more textures are allocated in the main memory 120.

### INDUSTRIAL APPLICABILITY

The present invention is applicable to a graphics processing technology.

## Claims

1. A multiprocessor system comprising:
a graphics processing unit having a local memory;
a general-purpose processing unit having a main memory; and
an I/O interface which connects an I/O port of the graphics processing unit and an I/O port of the general-purpose processing unit, the I/O interface adapted to exchange data between the graphics processing unit and the general-purpose processing unit, wherein:
a certain virtual memory area in the main memory is memory-mapped to an I/O address space that is accessible via the I/O interface so that the graphics processing unit can access the virtual memory area via the I/O interface; and
the virtual memory area in the main memory retains a file holding data that the graphics processing unit refers to in graphics computation, the data being not updated in the graphics computation, and the graphics processing unit accesses the virtual memory memory-mapped to the I/O address space via the I/O interface so as to read the file and utilize the file for the graphics computation.

2. The multiprocessor system of claim 1, wherein the virtual memory area of the main memory retains at least one of a plurality of files holding data that the graphics processing unit refers to in graphics computation, the data being not updated in the graphics computation and the local memory retains the rest of the files, and the graphics processing unit accesses the virtual memory memory-mapped to the I/O address space via the I/O interface to read the at least one of the files and also accesses the local memory to read the rest of the files so that the graphics processing unit can utilize the plurality of the files thus read for the graphics computation.

3. The multiprocessor system of claim 2, wherein the virtual memory area of the main memory retains at least one of the files that the graphics processing unit refers to in the graphics computation less frequently than a given threshold and the local memory retains the rest of the files.

4. The multiprocessor system of claim 2, wherein if a capacity of the local memory is smaller than that of the main memory, the virtual memory area of the main memory retains at least one of the files each having a file size larger than a given size and the local memory retains the rest of the files.

5. The multiprocessor system of claim 2, wherein when the number of the files to be retained in the virtual memory area of the main memory is variable, the virtual memory area of the main memory retains an optimal number of the files for maximizing transfer speed of the plurality of the files that the graphics processing unit refers to during reading and writing rendering data from/to the local memory to perform a rendering process, and the local memory retains the rest of the files.

6. The multiprocessor system of claim 1, wherein the virtual memory area of the main memory and the local memory retain the same file redundantly, and the graphics processing unit switches between reading the file by accessing the virtual memory via the I/O interface and reading the file by accessing the local memory, depending on congestion status of a bus of the local memory and utilizes the file thus read from the virtual memory or the local memory for the graphics computation.

7. The multiprocessor system of any one of claims 1-6, wherein the virtual memory area of the main memory retains a file holding mapping data necessary for a mapping process to be conducted by the graphics processing unit, and the graphics processing unit accesses the virtual memory memory-mapped to the I/O address space via the I/O interface to read the file and utilizes the file for the mapping process.

8. A library module in which program modules to be called from a program executed by a general-purpose processing unit coupled to a graphics processing unit via an I/O interface are compiled into a file, the library module causing the general-purpose processing unit to perform:
a memory management function for memory-mapping a certain virtual memory area in a main memory installed in the general-purpose processing unit to an I/O address space which is accessible via the I/O interface so that the graphics processing unit can access the virtual memory area via the I/O interface; and
a data allocation function for allocating a file holding data that the graphics processing unit refers to in graphics computation in the virtual memory area of the main memory, the data being not updated in the graphics processing.

9. The graphics library module of claim 8, further causing the general-purpose processing unit to perform:
an interface function for receiving designation of at least one file to be allocated in the virtual memory area of the main memory among a plurality of files holding data that the graphics processing unit refers to in graphics computation, the data being not updated in the graphics computation; and
a data transfer function for transferring data between the main memory and a local memory installed in the graphics processing unit, wherein
the data allocation function allocates the at least one file thus designated among the plurality of the files in the main memory and the data transfer function transfers the rest of the files to the local memory.

10. A program executable in a multiprocessor system in which a general-purpose processing unit and a graphics processing unit are connected to each other via an I/O interface,
the program causing the general-purpose processing unit to perform:
a memory management function for memory-mapping a certain virtual memory area in a main memory installed in the general-purpose processing unit to an I/O address space which is accessible via the I/O interface so that the graphics processing unit can access the virtual memory area via the I/O interface; and
a data allocation function for allocating a file holding data that the graphics processing unit refers to in graphics computation in the virtual memory area of the main memory, the data being not updated in the graphics processing, and
the program causing the graphics processing unit to perform:
a data reading function for accessing the virtual memory memory-mapped to the I/O address space via the I/O interface to read the file; and
a graphics processing function for utilizing the file thus read from the virtual memory for the graphics computation.

11. A rendering processing method employed in a multiprocessor system in which a general-purpose processing unit and a graphics processing unit are connected to each other via an I/O interface, the method comprising:
memory-mapping a certain virtual memory area in a main memory installed in the general-purpose processing unit to an I/O address space which is accessible via the I/O interface so that the graphics processing unit can access the virtual memory area via the I/O interface;
retaining in the virtual memory area of the main memory a file holding data that the graphics processing unit refers to in graphics computation, the data being not updated in the graphics processing; and
accessing, by the graphics processing unit, the virtual memory memory-mapped to the I/O address space via the I/O interface so as to read the file and utilizing the file for the graphics computation.
